Europäisches Patentamt

European Patent Office

Office européen des brevets

(11) Veroffentlichungsnummer **0 158 784**

**A1**

(12) **EUROPÄISCHE PATENTANMELDUNG**

(21) Anmeldenummer: 85101534.7

(22) Anmeldetag: 13.02.85

(51) Int. Cl.⁴: **B 23 Q 1/18**
**F 16 H 19/00**

(30) Priorität: 20.03.84 DE 3410150
28.07.84 DE 3427949

(43) Veröffentlichungstag der Anmeldung:
23.10.85 Patentblatt 85/43

(84) Benannte Vertragsstaaten:
AT BE CH FR GB IT LI LU NL SE

(71) Anmelder. Preh Industrieausrüstungen GmbH
Schweinfurter Strasse 5 Postfach 1740
D-8740 Bad Neustadt/Saale(DE)

(72) Erfinder: Laukenmann, Erich, Dipl.-Ing.
Mönchsweg 30
D-8740 Bad Neustadt/Saale(DE)

(72) Erfinder: Bardroff, Hans
Schuhmarktstrasse 12
D-8740 Bad Neustadt/Saale(DE)

(54) X-Y-Koordinaten Positioniereinrichtung.

(57) Die Erfindung beschreibt eine X-Y-Koordinaten Positioniereinrichtung, bei der auf einem Arbeitstisch (1) eine U-förmige Profilschiene (2) angeordnet ist. Auf dieser Schiene (2) wird mittels eines ersten motorgetriebenen, ortsfesten Linearantriebes (17) ein der X-Kooordinate zugeordneter Längsschlitten (9) bewegt. Senkrecht zu diesem Längsschlitten (9) ist ein der Y-Koordinate zugeordneter Querschlitten (14) auf dem Längsschlitten (9) verschiebbar. Diese Verschiebung erfolgt mit Hilfe eines zweiten motorgetriebenen Linearantriebes (29). Um das dabei bewegbare Gewicht zu reduzieren, wird vorgeschlagen, daß der zweite Linearantrieb (29) aus einem ortsfesten Schrittschaltmotor (29) besteht, der über seine Welle einen eine Profilierung aufweisenden Zahnriemen (4) antreibt, der auf einer Seite fest eingespannt ist. Der Zahnriemen (4) wird an Umlenkrollen (13) jeweils in einem rechten Winkel umgelenkt und er wirkt mit einer Profilierung von Leitrollen (15) zusammen, die sich endseitig am Querschlitten (14) befinden.

Fig. 1

P r e h
Industrieausrüstungen GmbH
Schweinfurter Straße 5
8740 Bad Neustadt/Saale

0158784

, den 26.07.1984

16/84 Pt.
Bsch/Hi

## X-Y-Koordinaten Positioniereinrichtung

Die Erfindung geht von einer X-Y-Koordinaten Positioniereinrichtung nach dem Oberbegriff des Anspruches 1 aus.

Eine derartige Positioniereinrichtung ist Bestandteil eines Handhabungssystems. Im Bemühen um Rationalisierung der Produktion sollen Handhabungssysteme einen Ersatz darstellen für häufigere, meist monotone Tätigkeiten des Menschen. Um dieses Ziel erreichen zu können, müssen die Geräte des Systems sich mechanisch in mehreren Freiheitsgraden bewegen können. Jede Bewegung wird über ein Meßsystem erfaßt und von einem geräteinternen Rechner registriert und gespeichert. Diese Bewegungszyklen sind frei programmierbar und können beliebig abgerufen oder geändert werden. Man unterscheidet insgesamt bis zu sechs verschiedene Freiheitsgrade, wobei jeder Freiheitsgrad durch eine Untereinheit des Gerätes realisiert werden kann. Zum Einsatz kommen so Lineareinheiten, Rotationseinheiten, Greifer usw.. Die hier nachfolgend beschriebene erfindungsgemäße Positioniereinrichtung zählt zu den Lineareinheiten.

Aus der DE-Zeitschrift Elektronik Heft 1, 1984 Seite 68 ist bereits eine X-Y-Koordinaten Positioniereinrichtung bekannt, bei der auf einem Arbeitstisch zu beiden Seiten der Bearbeitungsfläche Profilschienen angeordnet sind. Auf diesen Profilschienen gleitet in einer Doppelspurführung für die X-Achse ein Längsschlitten, der durch ein Handrad bewegt werden kann. Senkrecht zum Längsschlitten gleitet auf ihm in Doppelspurführung für die Y-Achse ein Querschlitten, der ebenfalls durch ein Handrad bewegt werden kann. Anstelle der Handräder können zur automatischen Positionierung in der X- und in der Y-Achse mittels eines Mikroprozessors ein Gleichstrommotor nebst Steuerung oder ein Schrittmotor nebst Steuerung vorgesehen sein. Der Motor für den Querschlitten befindet sich am stirnseitigen Ende des Längsschlittens, so daß er bei Bewegungen des Längsschlittens in der X-Achse immer mit bewegt werden muß. Da dieser Motor außerdem ein gewisses Gewicht hat, wirkt sich dies nachteilig aus.

**0158784**

Aufgabe der vorliegenden Erfindung ist es, für eine X-Y-Koordinaten Positioniereinrichtung einen zweiten Linearantrieb zu schaffen, bei dem unter Gewichtsverminderung der bewegbaren Masse der Antrieb für den Querschlitten ortsfest ist.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Nachfolgend wird die Erfindung für ein Ausführungsbeispiel anhand der Zeichnungen näher beschrieben.

Von den Figuren zeigt

Figur 1   eine Draufsicht auf die Positioniereinrichtung teilweise aufgebrochen,

Figur 2   eine Vorderansicht der Positioniereinrichtung,

Figur 3   einen Schnitt durch die U-förmige Profilschiene,

Figur 4   eine Seitenansicht der Positioniereinrichtung.

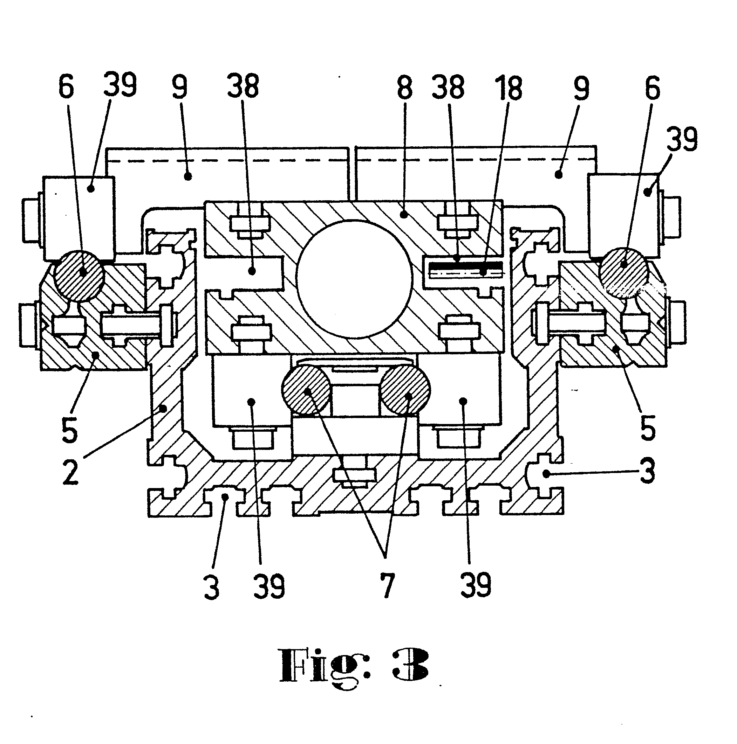

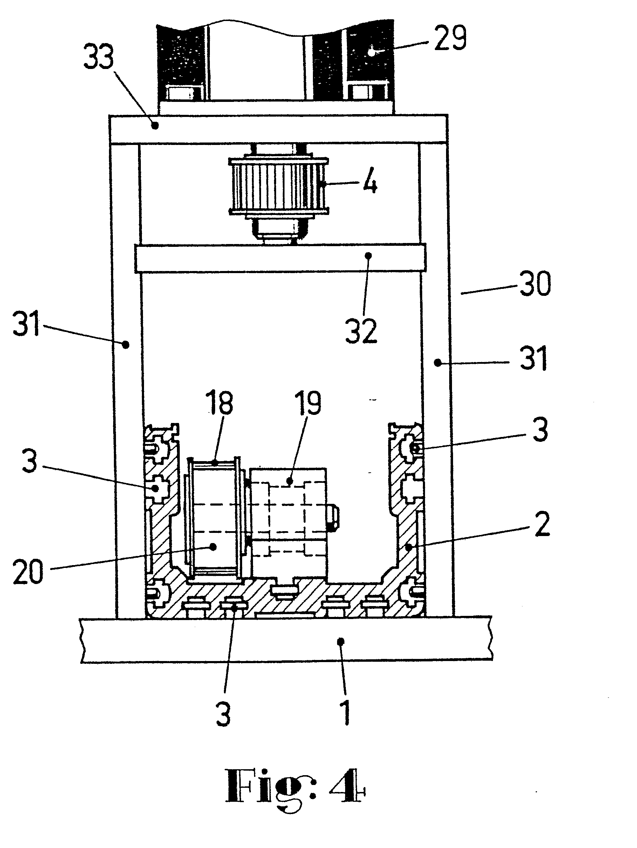

Mit 1 ist in Figur 4 ein nicht näher dargestellter Arbeitstisch bezeichnet, auf dem eine X-Y-Koordinaten Positioniereinrichtung befestigt ist. Diese besitzt unter anderem eine, wie aus Figur 3 zu entnehmen ist, U-förmige Profilschiene 2. Sie besteht aus Aluminium blank und sie ist natur eloxiert. Auf dem Umfang verteilt, vorzugsweise auf der Außenseite, besitzt sie elf Einzüge in der Form von Kreuznuten 3 für Gleitmuttern zum Befestigen der Profilschiene in verschiedenen Lagen, sowie zum Anschrauben von Doppelspurführungen. Derartige Profilschienen sind käuflich erwerbbar und in den verschiedensten Längen lieferbar.

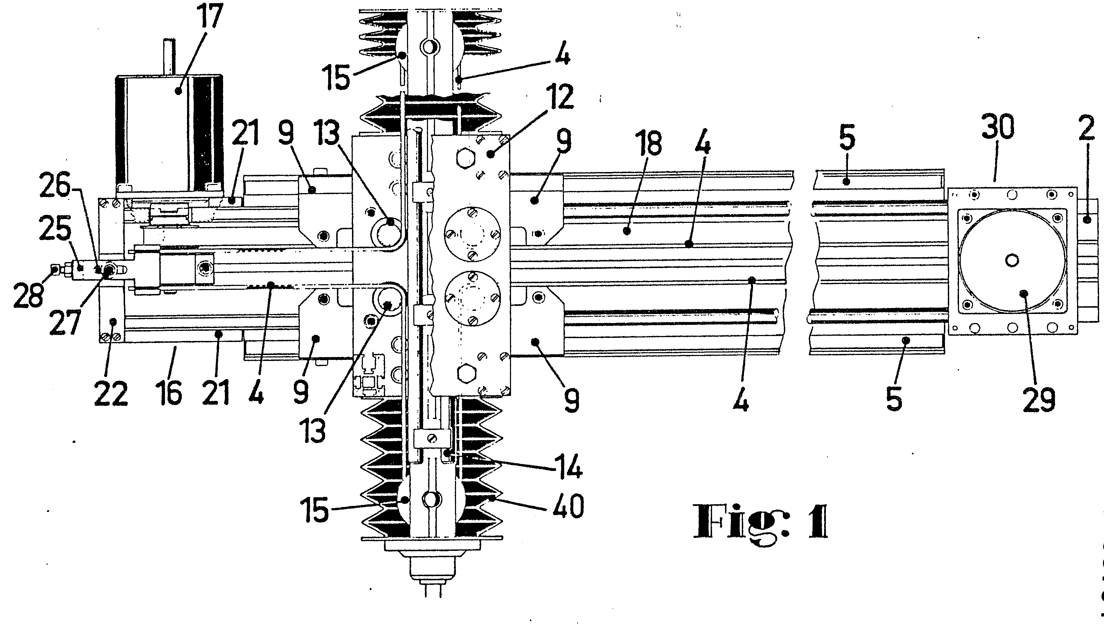

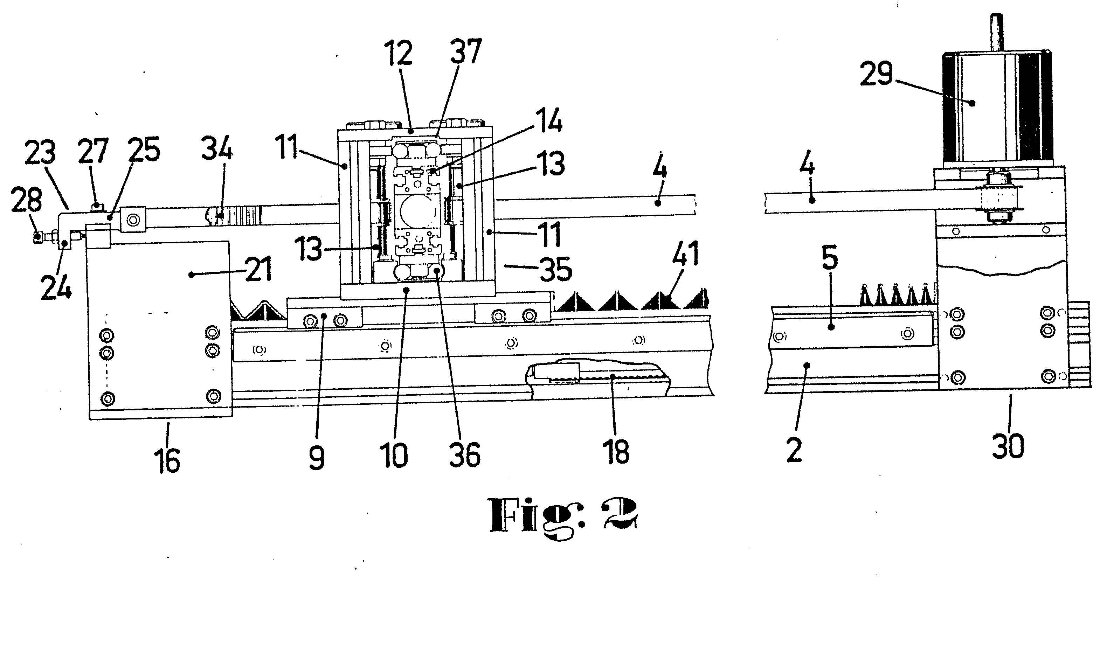

Wie aus den Figuren 1 und 2 zu entnehmen ist, ist am linken Ende der Profilschiene 2 ein Stützteil 16 vorgesehen, das aus zwei beidseitig zur Profilschiene 2 angeordneten Wänden 21 besteht, die beide durch eine Querleiste 22 miteinander verbunden sind. Auf der einen Seite ist an der Wand 21 ein erster Schrittschaltmotor 17 für den ersten Linear-

0158784

antrieb für die Y-Koordinate angebracht. Direkt oder über ein Getriebe treibt der Motor einen ersten Zahnriemen 18 an. Am anderen Ende der Profilschiene 2 befindet sich, wie Figur 4 zeigt, ein Lagerbock 19 mit einer darin drehbar gelagerten Scheibe 20. Um diese Scheibe wird der erste Zahnriemen 18 umgelenkt. Der Zahnriemen 18 läuft hierbei innerhalb der U-förmigen Profilschiene 2. Mit dem Zahnriemen 18 verbunden ist eine Wagenplattform 9. Dreht sich die Welle des Schrittschaltmotors 17, so wird durch den Zahnriemen 18 die Wagenplattform 9 in der X-Koordinate verschoben.

Die Wagenplattform 9 ist an einem Gleitkörper 8 befestigt, der innerhalb der U-förmigen Profilschiene 2 auf einer Doppelspurführung verschiebbar geführt ist. Diese Doppelspurführung besteht aus zwei parallelen Wellen 7, die am Boden der Profilschiene 2 gehaltert sind. Um eine leichte Führung zu erzielen, besitzt der Gleitkörper 8, wie aus Figur 3 zu entnehmen ist, Linearkugellager 39, mit deren Hilfe er auf den Wellen 7 geführt ist. Da die Wagenplattform 9 in extremer Y-Koordinaten-Position in Abhängigkeit von der aufzubringenden Kraft für z.B. einen Greifer mit einem erheblichen Drehmoment belastet wird, sind rechts und links der U-förmigen Profilschiene 2 zwei weitere Linearführungen vorgesehen. Diese bestehen aus an der Außenwand der Profilschiene befestigten Wellenklemmprofilschienen 5, die ebenfalls aus Aluminium hergestellt sind. Die Wellenklemmprofilschiene 5 besitzt hierzu einen Rundeinzug zur Klemmbefestigung von Stahlwellen, sowie einen T-Nuten-Einzug für eine Gleitmutter zur Befestigung an der Profilschiene. Die Stahlwellen für die zweite und dritte Linearführung sind mit 6 bezeichnet. Zur Klemmbefestigung der Stahlwellen in der Wellenklemmprofilschiene sind im Abstand Bohrungen für Schrauben vorgesehen. Mit Hilfe weiterer Linearkugellager 39 ist die Wagenplattform 9 auf den Wellen 6 geführt.

Bei dem Linearkugellager handelt es sich um zwei in einem Kunststoffkäfig parallel und übereinander angeordnete endlose Kugelumläufe mit jeweils 34 Kugeln. Die Wärmeentwicklung und der Verschleiß durch die rollende Reibung sind sehr gering. Die Lastverteilung erfolgt über die gesamte Kugelreihe. Die Lastaufnahme der Kugeln erfolgt dabei durch eine sogenannte Dreipunktauflage im Winkel von 120 Grad. Die spielfreie Einstellung des Lagers erfolgt über zwei Excenterschrauben.

Die Wagenplattform 9 trägt ein Lagerteil 35. Dieses besteht aus einer rechteckförmigen Grundplatte 10, an der in den vier Ecken jeweils eine Säule 11 angeordnet ist.Den Abschluß bildet eine alle Säulen 11 überdeckende Tischplatte 12. Die Säulen sind ebenfalls in der Art der Profilschiene ausgebildet und aus Aluminium hergestellt. Etwa in der Mitte sind zwischen den Säulen 11 insgesamt vier voneinander beabstandete Umlenkrollen 13 in Drehlagern drehbar gelagert.

Wie in Figur 2 zu erkennen ist, ist mit 14 ein Querschlitten bezeichnet, der die Form einer rechteckigen Profilschiene aufweist. Am Umfang verteilt sind insgesamt 6 Einzüge im Kreuznutenprofil vorgesehen. Außerdem besitzt die Profilschiene einen mittig ausgesparten Hohleinzug. Um Gewicht einzusparen, ist auch dieser Querschlitten aus Aluminium hergestellt. Geführt ist der Querschlitten 14 zwischen den Säulen 11 durch eine obere Doppelspurführung 37 und eine untere Doppelspurführung 36. Diese besteht ebenso wie die bereits beschriebene Doppelspurführung aus zwei parallel nebeneinander angeordneten Wellen, auf denen mittels weiterer Linearkugellager der Querschlitten geführt ist.

An beiden Enden des Querschlittens 14 ist ein Leitrolle 15 drehbar befestigt. Außerdem besitzt ein Ende des Querschlittens z.B. einen Greifkopf mit Greifarmen und Zangengliedern. Der Greifkopf selbst ist nicht dargestellt, da er für die Erfindung nicht von Bedeutung ist. Es können Greifköpfe unterschiedlichster Bauart Verwendung finden.

Angetrieben wird der Querschlitten 14 für die Y-Koordinate durch einen Zahnriemen 4, der wie Figur 2 zeigt, durch ein Einspannmittel an einem Ende der U-förmigen Profilschiene 2 festgehalten wird. Das zwischen den Wänden 21 auf einer Querleiste 22 befestigte Einspannmittel besteht aus einem Winkelstück 23 mit einem langen Schenkel 25 und einem kurzen Schenkel 24. Der Zahnriemen selbst ist am freien Ende des langen Schenkels 25 befestigt. Ferner besitzt der lange Schenkel 25 einen Längsschlitz 26, durch den eine Befestigungsschraube 27 ragt, die ihrerseits an der Querleiste befestigt ist. Mit Hilfe dieser Befestigungsschraube 27 kann eine Grobeinstellung der Zahnriemenspannung vorgenommen werden. Eine Feineinstellung erfolgt durch eine Stellschraube 28, die am kurzen Schenkel 24 befestigt ist und die sich an der Querleiste 22 abstützt.

**0158784**

Sowohl der Zahnriemen 18 als auch der Zahnriemen 4 sind aus Polyurethan gefertigt und sie besitzen beide eine Bewehrung aus Stahllitzen. Damit ist die Gefahr einer Nachlängung bei Belastung ausgeschaltet. Derartige Zahnriemen sind als Meterware käuflich erwerbbar und mit einem Spezialschweißverfahren können sie im Bedarfsfall zu Endloslängen verbunden werden. Dadurch, daß diese Zahnriemen eine Profilierung 34 in der Form von Zähnen besitzen, sind sie für einen schlupflosen Betrieb gut geeignet.

Wie aus der Figur 1 zu erkennen ist, ist der Zahnriemen 4 auf der linken Seite durch Einspannmittel befestigt. Er läuft dann über die linke obere Umlenkrolle 13 zu der oberen Leitrolle 15. Von dort ist er über die rechte obere Umlenkrolle zum Antrieb rechts außen an der Profilschiene 2 geführt. Danach gelangt er über die rechte untere Umlenkrolle zu der unteren Leitrolle 15, von wo er über die linke untere Umlenkrolle 13 zum Einspannmittel zurückgeführt ist. Die Umlenkrollen dienen nur zum Umlenken des Zahnriemens und sie besitzen eine glatte Oberfläche. Demhingegen sind die beiden Leitrollen umfangseitig mit einem Zahnkranz versehen, dessen Zähne mit den Zähnen des Zahnriemens zusammenwirken.

Der Antrieb für diesen Zahnriemen 4 besteht aus einem Schrittschaltmotor 29, dessen Welle umfangseitig Zähne aufweist, die in die Zähne des Zahnriemens eingreifen. Die Welle kann direkt oder über ein Getriebe den Zahnriemen antreiben. Der Schrittschaltmotor 29 ist an einem Brückenglied 30 befestigt, das aus zwei seitlich an der Profilschiene angebrachten Seitenwänden 31, wie Figur 4 zeigt, besteht. Verbunden sind die Seitenwände durch eine Zwischenplatte 32 und eine den Schrittschaltmotor 29 tragende Deckplatte 33.

Dreht sich nun der ortsfeste Schrittschaltmotor 29 des zweiten Linearantriebes für die Y-Koordinate, so wird der Zahnriemen 4 bewegt. Damit drehen sich auch die Leitrollen 15 und die Profilschiene 14 wird in Figur 1 von oben nach unten, also in der Y-Koordinate, bewegt. Die seitliche Verschiebung nach rechts oder links, also in der X-Koordinate, erfolgt mit Hilfe des Zahnriemens 18, der von dem Schrittschaltmotor 17 des ersten Linearantriebes angetrieben wird.

Um die Profilschiene 14 gegen Staub und sonstige Verunreinigung zu schützen, ist sie mit einer Faltenbalgmanschette 40 aus einem gummielastischen Material überzogen. In ähnlicher Weise ist insbesondere der Linearantrieb der 0158784 Profilschiene 2 durch die Faltenbalgmanschette 41 geschützt.

Damit der Zahnriemen 18 des ersten Linearantriebes innerhalb der U-förmigen Profilschiene 2 angeordnet werden kann, ist der Gleitkörper 8 mit einer sich längs erstreckenden Ausnehmung 38 versehen. Durch diese Ausnehmung ist der Zahnriemen hindurchgeführt. Der Gleitkörper kann sowohl einseitig als auch beidseitig derartige Ausnehmungen aufweisen.

Anstelle des mit der Profilierung versehenen Zahnriemens könnte man auch ein straff gespanntes Seil verwenden, da die mehrfache Umlenkung auch die erforderliche Reibung für eine schlupffreie Mitnahme liefert.

7

0158784

1 Arbeitstisch

2 Profilschiene

3 Kreuznut

4 Zahnriemen des zweiten Linearantriebs

5 Wellenklemmprofilschiene

6 Welle der zweiten und dritten Linearführung

7 Welle der Doppelspurführung

8 Gleitkörper

9 Wagenplattform

10 Grundplatte des Lagerteils

11 Säule

12 Tischplatte

13 Umlenkrolle

14 Profilschiene

15 Leitrolle

16 Stützteil

17 Schrittschaltmotor für ersten Linearantrieb

18 Zahnriemen des ersten Linearantriebs

19 Lagerbock

20 Scheibe

21 Wand

22 Querleiste

23 Winkelstück

24 kurzer Schenkel

25 langer Schenkel

26 Längsschlitz

27 Befestigungsschraube

28 Stellschraube

29 Schrittschaltmotor für zweiten Linearantrieb

30 Brückenglied

31 Seitenwand

32 Zwischenplatte

33 Deckplatte

34 Profilierung

35 Lagerteil

36 untere Doppelspurführung

37 obere Doppelspurführung

38 Ausnehmung

39 Linearkugellager

40 Faltenbalgmanschette

41 Faltenbalgmanschette

Preh
Industrieausrüstungen GmbH
Schweinfurter Straße 5
8740 Bad Neustadt/Saale

0158784

, den 26.07.1984

Bsch/Hi
16/84 Pt.

## X-Y-Koordinaten Positioniereinrichtung

1. X-Y-Koordinaten Positioniereinrichtung mit mindestens einem an einem Arbeitstisch (1) befestigbaren Grundkörper (2), auf dem mindestens ein der ersten Koordinate zugeordneter Längsschlitten (8, 9, 35) mittels eines ersten motorgetriebenen, ortsfesten Linearantriebes längs des Grundkörpers (2) verschiebbar angeordnet ist, wobei senkrecht zu dieser Schieberichtung auf dem Längsschlitten (8, 9, 35) mindestens ein der zweiten Koordinate zugeordneter Querschlitten (14) mittels eines zweiten motorgetriebenen Linearantriebes verschiebbar ist, dadurch gekennzeichnet, daß der zweite Linearantrieb aus einem ortsfest mit dem Grundkörper (2) verbundenen Schrittschaltmotor (29) besteht, der über seine Motorwelle ein eine Profilierung (34) aufweisendes, umlenkbares Fördermittel (4) antreibt, das auf der einen Seite an einem mit dem Grundkörper (2) verbundenen, ortsfesten Einspannmittel (23 bis 27) fest eingespannt ist und das auf der anderen Seite an der Motorwelle umgelenkt wird derart, daß das Fördermittel (4) über Umlenkrollen (13) des Längsschlittens (8, 9, 35) und über richtungsumkehrende, mit der Profilierung (34) des Fördermittels (4) zusammenwirkende Leitrollen (15) des Querschlittens (14) geführt ist.

2. X-Y-Koordinaten Positioniereinrichtung nach Anspruch 1,
dadurch gekennzeichnet,
daß das Fördermittel ein Zahnriemen (4) ist.

3. X-Y-Koordinaten Positioniereinrichtung nach Anspruch 2,
dadurch gekennzeichnet,
daß der Zahnriemen (4) aus Polyurethan hergestellt ist und eine Bewehrung durch Stahllitze aufweist.

- 2 -

**0158784**

4. X-Y-Koordinaten Positioniereinrichtung nach Anspruch 1, dadurch gekennzeichnet, daß der Grundkörper eine U-förmige Profilschiene (2) mit zur Schienenaußenseite hin offenen Kreuznuten (3) zur Aufnahme von Gleitmuttern ist.

5. X-Y-Koordinaten Positioniereinrichtung nach Anspruch 1, dadurch gekennzeichnet, daß der Längsschlitten (8, 9, 35) durch drei Linearführungen geführt ist.

6. X-Y-Koordinaten Positioniereinrichtung nach Anspruch 5, dadurch gekennzeichnet, daß sich eine erste Linearführung am Innenboden der Profilschiene (2) und sich eine zweite und dritte Linearführung jeweils auf einer Schienenaußenseite befindet.

7. X-Y-Koordinaten Positioniereinrichtung nach Anspruch 6, dadurch gekennzeichnet, daß die zweite und dritte Linearführung aus einer Wellenklemmprofilschiene (5) besteht, in derem Rundeinzug eine Welle (6) festgeklemmt ist.

8. X-Y-Koordinaten Positioniereinrichtung nach Anspruch 6, dadurch gekennzeichnet, daß die erste Linearführung eine Doppelspurführung mit zwei parallel liegenden Wellen (7) ist.

9. X-Y-Koordinaten Positioniereinrichtung nach Anspruch 1 und 8, dadurch gekennzeichnet, daß der Längsschlitten (8, 9, 35) aus einem auf der Doppelspurführung geführten Gleitkörper (8) besteht, der mit einer auf der zweiten und dritten Linearführung geführten Wagenplattform (9) verbunden ist, die ihrerseits ein Lagerteil (35) für den an ihm geführten Querschlitten (14) trägt.

0158784

10. X-Y-Koordinaten Positioniereinrichtung nach Anspruch 9, dadurch gekennzeichnet, daß das Lagerteil (35) eine mit der Wagenplattform (9) verbundene, rechteckige Grundplatte (10) ist, an deren vier Ecken je eine Säule (11) angeordnet ist, auf denen eine allen Säulen (11) gemeinsame Tischplatte (12) aufliegt.

11. X-Y-Koordinaten Positioniereinrichtung nach Anspruch 10, dadurch gekennzeichnet, daß zwischen Grundplatte (10) und Tischplatte (12) mehrere Umlenk- rollen (13) angeordnet sind.

12. X-Y-Koordinaten Positioniereinrichtung nach Anspruch 10, dadurch gekennzeichnet, daß der Querschlitten (14) zwischen den Säulen (11) in einer oberen und einer unteren Doppelspurführung (37 bzw. 36) geführt ist und beidseitig aus dem Lagerteil (35) herausragt.

13. X-Y-Koordinaten Positioniereinrichtung nach einem der Ansprüche 1 bis 12, dadurch gekennzeichnet, daß der Querschlitten eine Profilschiene (14) ist, an derem beidseitigen Ende jeweils eine Leitrolle (15) angeordnet ist.

14. X-Y-Koordinaten Positioniereinrichtung nach Anspruch 1, dadurch gekennzeichnet, daß der erste Linearantrieb aus einem an einem Ende der Profilschiene (2) an einem Stützteil (16) befestigten Schrittschaltmotor (17) besteht, der direkt oder über ein Getriebe einen umlaufenden Zahnriemen (18) antreibt, wobei am anderen Ende der Profilschiene (2) ein Lagerbock (19) mit einer drehbaren Scheibe (20) zum Umlenken des Zahnriemens (18) vorgesehen ist.

15. X-Y-Koordinaten Positioniereinrichtung nach Anspruch 14, dadurch gekennzeichnet, daß das Stützteil (16) aus zwei auf der Außenseite der Profilschiene (2) befestigten Wänden (21) und einer diese Wände verbindende Quer- leiste (22) besteht.

- 4 -

0158784

16. X-Y-Koordinaten Positioniereinrichtung nach einem der Ansprüche 1 bis 14, dadurch gekennzeichnet, daß das Einspannmittel für den Zahnriemen (4) aus einem Winkelstück (23) mit einem langen und einem kurzen Schenkel (25 bzw. 24) besteht, wobei der Zahnriemen (4) am freien Ende des langen Schenkels (25) befestigt ist und der lange Schenkel (25) einen Längsschlitz (26) aufweist derart, daß das Winkelstück (23) mit Hilfe einer durch den Längsschlitz (26) ragenden Befestigungsschraube (27) an der Querleiste (22) zur Grobeinstellung der Zahnriemenspannung befestigbar ist.

17. X-Y-Koordinaten Positioniereinrichtung nach Anspruch 16, dadurch gekennzeichnet, daß am kurzen Schenkel (24) zur Feineinstellung der Zahnriemenspannung eine sich an der Querleiste (22) abstützende Stellschraube (28) angeordnet ist.

18. X-Y-Koordinaten Positioniereinrichtung nach Anspruch 1, dadurch gekennzeichnet, daß der Schrittschaltmotor (29) für den zweiten Linearantrieb an dem dem Stützteil (16) gegenüberliegenden Ende der Profilschiene (2) an einem Brückenglied (30) befestigt ist.

19. X-Y-Koordinaten Positioniereinrichtung nach Anspruch 18, dadurch gekennzeichnet, daß das Brückenglied (30) aus zwei seitlich an der Profilschiene (2) befestigten Seitenwänden (31), einer Zwischenplatte (32) und einer den Schrittschaltmotor (29) tragenden Deckplatte (33) besteht.

20. X-Y-Koordinaten Positioniereinrichtung nach Anspruch 9, dadurch gekennzeichnet, daß im Gleitkörper (8) ein- oder beidseitig eine Ausnehmung (38) für einen oder einen zweiten Zahnriemen (18) ausgespart ist.

Fig. 1

Fig. 2

01587844

PIA 16/84

0158784

Fig: 3

PIA 16/84

Fig: 4

0158784

Nummer der Anmeldung

EP   85 10 1534

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-C-3 233 428   (MÜLLER)  <br><br> * Anspruch 1 * | 1,2,11 ,13,14 | B 23 Q   1/18 <br> F 16 H   19/00 |
| Y |  | 4,8 |  |
| P,Y | EP-A-0 107 776   (BOSCH) <br> * Seite 4, Zeilen 7-22 * | 4,8 |  |
| A | IBM TECHNICAL DISCLOSURE BULLETIN, Band 14, Nr. 8, Januar 1972, Seiten 2375-2378, New York, US; D. FORSLUND: "Differential cable drive mechanism" | 1 |  |
| A | US-A-3 850 043   (TARBOX) | 16 | RECHERCHIERTE SACHGEBIETE (Int. Cl.4) |
| A | CH-A-  381 929   (FISCHER) | 7 | B 23 Q <br> F 16 H <br> F 15 B |
| A | DE-A-3 151 817   (CITIZEN) | 1 |  |
| A | FR-A-2 512 365   (FOUQUET) | 1 |  |
| A | GB-A-  588 986   (KAPELLA) | 1 |  |

Der vorliegende Recherchenbericht wurde für alle Patentansprüche erstellt.

| Recherchenort <br> DEN HAAG | Abschlußdatum der Recherche <br> 28-06-1985 | Prüfer <br> THE K.H. |
|---|---|---|